# EUROPÄISCHE PATENTSCHRIFT

(11) **EP 2 651 679 B1**
(45) Veröffentlichungstag und Bekanntmachung des Hinweises auf die Patenterteilung: **10.02.2016**
(21) Anmeldenummer: 11770811.5
(22) Anmeldetag: 20.10.2011
(51) Int. Cl.: B60K 6/10, B60K 6/28, B60K 6/30

(54) **MECHANISCHER ENERGIESPEICHER FÜR EIN FAHRZEUG**
MECHANICAL ENERGY ACCUMULATOR FOR A VEHICLE
ACCUMULATEUR D'ÉNERGIE MÉCANIQUE POUR UN VÉHICULE

(30) Priorität: 17.12.2010 DE 102010063335
(43) Veröffentlichungstag der Anmeldung: 23.10.2013
(73) Patentinhaber: Robert Bosch GmbH, 70442 Stuttgart (DE)
(72) Erfinder: HEYSE, Joerg, 74354 Besigheim (DE); TIEFENBACH, Andy, 71665 Vaihingen - Horrheim (DE); SCHNIEDERTOENS, Thomas, 70178 Stuttgart (DE)
(86) Internationale Anmeldenummer: PCT/EP2011/068347
(87) Internationale Veröffentlichungsnummer: WO 2012/079812

(56) Entgegenhaltungen:
- WO-A1-2004/000595
- DD-A1- 118 152
- US-A- 4 233 858
- US-A- 5 309 778
- US-A1- 2010 184 549

## Beschreibung

### GEBIET DER ERFINDUNG

Die Erfindung betrifft einen mechanischen Energiespeicher, der in einem Fahrzeug, insbesondere in einem Elektro- oder Hybridfahrzeug eingesetzt werden kann. Ferner betrifft die Erfindung ein Fahrzeug mit einem solchen mechanischen Energiespeicher.

### STAND DER TECHNIK

Ein Energiespeicher nach dem Oberbegriff des Anspruchs 1 ist aus D D118152 bekannt.

Elektro- und Hybridfahrzeuge werden zumindest teilweise über einen Elektromotor, der auch in einem Generatormodus betrieben werden kann, angetrieben. Dabei ist es zur Senkung eines Gesamtenergieverbrauchs erwünscht, kinetische Energie beim Abbremsen des Fahrzeugs zu rekuperieren, das heißt, zurückzugewinnen, und für eine spätere Verwendung zu speichern.

Herkömmlich ist es üblich, während des Abbremsvorgangs die Elektromaschine in einem Generatormodus zu betreiben, um kinetische Energie in elektrische Energie umzuwandeln und dann in der Fahrzeugbatterie speichern zu können. Unabhängig von einer solchen elektrischen Energierekuperierung und -speicherung wurden auch bereits Fahrzeuge mit einem Schwungradmechanismus vorgeschlagen, bei denen beim Bremsen freiwerdende kinetische Energie mechanisch gespeichert wird.

Allerdings wurde erkannt, dass herkömmliche Rekuperationsmechanismen zumindest in manchen Fahr- bzw. Abbremssituationen nicht zu einer zufriedenstellenden Energierekuperation und Energiespeicherung führen können.

### OFFENBARUNG DER ERFINDUNG

Es kann daher ein Bedarf an einem Mechanismus zur Energierekuperation bzw. an einem Fahrzeug, das mit einem solchen Mechanismus ausgestattet ist, bestehen, wobei kinetische Energie des Fahrzeugs oder auch Energie, die von einem in dem Fahrzeug betriebenen Elektromotor zur Verfügung gestellt wird, in vorteilhafter Weise gespeichert und bei Bedarf wieder abgegeben werden kann.

Einem solchen Bedarf wird mit dem Gegenstand der unabhängigen Ansprüche entsprochen. Vorteilhafte Ausgestaltungen sind in den abhängigen Ansprüchen definiert.

Gemäß einem ersten Aspekt der vorliegenden Erfindung wird ein mechanischer Energiespeicher für ein Fahrzeug, insbesondere für ein Elektro- oder Hybridfahrzeug vorgeschlagen. Der Energiespeicher weist ein Planetengetriebe auf. Ein Sonnenrad des Planetengetriebes ist dabei mit dem Motor des Fahrzeugs drehfest verbunden. Dieser Motor ist bei Elektro- oder Hybridfahrzeugen ein Elektromotor, der auch generatorisch betrieben werden kann, so dass sowohl Kraft von dem Motor auf das Sonnenrad als auch in umgekehrter Richtung übertragen werden kann. Ein Außenrad des Planetengetriebes ist mit einem Radantrieb des Fahrzeugs verbunden, um das Fahrzeugrad rotatorisch anzutreiben. Planetenräder des Planetengetriebes sind über ein Planetenradgestänge fest miteinander verbunden. Erfindungsgemäß weisen die Planetenräder zur Vergrößerung ihrer Schwungmasse sogenannte Schwungmassenbereiche auf, die einen größeren Durchmesser aufweisen, als ein zwischen dem Sonnenrad und dem Außenrad angeordneter Zahnradbereich der Planetenräder.

Gemäß einem zweiten Aspekt der vorliegenden Erfindung wird ein Fahrzeug, insbesondere ein Elektro- oder Hybridfahrzeug, vorgeschlagen, das mit einem erfindungsgemäßen mechanischen Energiespeicher ausgerüstet ist.

Nachfolgend werden Erkenntnisse und Ideen, auf denen Aspekte der Erfindung bzw. deren Ausführungsformen beruhen, kurz geschildert und Merkmale und Vorteile von erfindungsgemäßen Ausführungsformen beschrieben.

Es wurde erkannt, dass, bei einer herkömmlichen Energierekuperation in Fahrzeugen durch Umwandlung in elektrische Energie und anschließende Speicherung in der Fahrzeugbatterie, eine maximal rekuperierbare Menge der rückzugewinnenden Energie bzw. eine Rekuperationsleistung durch das Aufnahmevermögen der Fahrzeugbatterie begrenzt sein kann. Die Bremsenergie kann insbesondere bei stärkeren Fahrzeugverzögerungen häufig nur unzureichend in Form von rekuperierter Elektrizität in der Batterie gespeichert werden, da eine vollständige Umwandlung der kinetischen Energie in elektrische Energie und anschließende Speicherung zu einer Überlastung der elektrischen Komponenten des Fahrzeugs, insbesondere der Leistungselektronik und der Batterie, führen könnte. Bei harten Abbremsungen wird daher häufig ein Teil der Bremsenergie durch Reibungswärme aufgrund eines zusätzlichen herkömmlichen mechanischen Abbremsens in der Bremsscheibe vernichtet.

Mit dem hierin vorgeschlagenen mechanischen Energiespeicher kann zusätzlich zu der Möglichkeit einer elektrischen Energierekuperation und Speicherung eine Möglichkeit geschaffen werden, Energie in einem Fahrzeug auch mechanisch, insbesondere in Form von Rotationsenergie, zu speichern. Das Fahrzeug wird hierzu mit einem zusätzlichen Schwungradantrieb in Form eines speziell ausgestalteten Planetengetriebes ausgerüstet. Die Schwungräder, mit Hilfe derer mechanische Rotationsenergie gespeichert werden soll, werden dabei in Form von Planetenrädern des Planetengetriebes bereitgestellt. Um die in diesen Schwungrädern speicherbare Rotationsenergie zu maximieren, werden die Planetenräder derart ausgebildet, dass sie ein möglichst hohes Trägheitsmoment aufweisen und beim Betrieb des Planetengetriebes möglichst schnell rotieren.

Zur Maximierung der Schwungmasse bzw. des Trägheitsmomentes werden die Planetenräder mit zusätzlichen Schwungmassenbereichen versehen. Diese Schwungmassenbereiche sind drehfest mit einem Zahnradbereich des jeweiligen Planetenrades, der wie bei herkömmlichen Planetengetrieben zwischen dem Sonnenrad und dem Außenrad angeordnet ist und durch das Sonnenrad bzw. das Außenrad in Rotation versetzt werden kann, verbunden. Ein Schwungmassenbereich ist dabei rotationssymmetrisch um eine Drehachse des jeweiligen Planetenrades ausgebildet und kann beispielsweise eine Kreisscheibenform aufweisen. Ein Durchmesser eines Schwungmassenbereiches ist hierbei größer als der Durchmesser des Planetenrades im Zahnradbereich. Auf diese Weise kann erreicht werden, dass ein großer Teil der in den Schwungmassenbereichen enthaltenen Masse einen verhältnismäßig großen Abstand zu der Drehachse aufweist, wodurch das Trägheitsmoment des gesamten Planetenrades erheblich erhöht wird und somit bei gleicher Drehzahl mehr kinetische Energie in Form von Rotationsenergie in dem Planetenrad gespeichert werden kann.

Um eine möglichst hohe Rotationsgeschwindigkeit des Planetenrades während des Betriebes des Planetengetriebes zu erreichen, kann ein Übersetzungsverhältnis zwischen dem Sonnenrad und den Planetenrädern mindestens 20:1, vorzugsweise mindestens 30:1 und stärker bevorzugt mindestens 50:1 betragen. Mit anderen Worten kann das Planetenrad im Bereich des Zahnradbereiches einen im Verhältnis zum Durchmesser des Sonnenrades derart kleinen Durchmesser aufweisen, dass sich aufgrund der Anzahl von im Bereich des Zahnradbereichs angeordneten Zähnen des Planetenrades im Verhältnis zur Anzahl von Zähnen an dem Sonnenrad das gewünschte Übersetzungsverhältnis ergibt. Aufgrund eines derart hohen Übersetzungsverhältnisses kann auch bei geringer Drehzahl des Sonnenrades eine hohe Drehzahl und damit eine hohe Rotationsgeschwindigkeit der Planetenräder und der damit verbundenen Schwungmassenbereiche erreicht werden.

Zur Erreichung eines hohen Trägheitsmomentes der Planetenräder und damit eines hohen Energiespeichervermögens kann bei den Planetenrädern der Durchmesser der Schwungmassenbereiche wenigstens doppelt so groß, vorzugsweise wenigstens dreimal so groß und stärker bevorzugt wenigstens fünfmal so groß sein wie der Durchmesser der Zahnradbereiche. Der Durchmesser der Zahnradbereiche ist dabei weitgehend durch den Abstand zwischen dem Sonnenrad und dem Außenrad innerhalb des Planetengetriebes vorgegeben und liegt typischerweise bei Elektrofahrzeugen im Bereich von 0,5 bis 2 cm. Damit die Schwungmassenbereiche einen entsprechend größeren Durchmesser von beispielsweise zwischen 1 und 10 cm aufweisen können, sind die Schwungmassenbereiche vorzugsweise außerhalb des eigentlichen Planetengetriebes angeordnet, das heißt, in einer Ebene, die parallel versetzt zu der Ebene, in der das Sonnenrad, das Außenrad und die Zahnradbereiche der Planetenräder angeordnet sind, ist.

Um einerseits eine vorteilhafte Kräfteverteilung an den Planetenrädern zu realisieren und um andererseits die mit den Zahnradbereichen der Planetenräder verbundene Schwungmasse zu maximieren, können die Planetenräder an beiden axialen Enden mit Schwungmassenbereichen versehen sein. Die Schwungmassenbereiche sind dabei vorzugsweise identisch ausgebildet.

Ferner können die Planetenräder einstückig sein, das heißt, der Zahnradbereich und der oder die Schwungmassenbereich(e) können integral ausgebildet sein. Durch eine solche einstückige Ausbildung kann eine ausreichend hohe mechanische Stabilität erreicht werden, um den beim schnellen Rotieren der Planetenräder und insbesondere deren Schwungmassen auftretenden Kräfte standzuhalten.

Die Planetenräder können teilweise oder vollständig aus Metall gebildet sein. Aufgrund des üblicherweise hohen spezifischen Gewichts der meisten Metalle kann auf diese Weise eine große Schwungmasse bei gleichzeitig hoher mechanischer Belastbarkeit erreicht werden. Mögliche verwendbare Metalle sind zum Beispiel 16MnCr5, 20MnCr5, 18CrMo4.

Alternativ oder ergänzend können die Planetenräder mit einem Kunstfaserwerkstoff gebildet sein. Insbesondere bei der Verwendung hochfester Kunstfasern wie zum Beispiel Kohlefasern oder Kevlarfasern können solche Kunstfaserwerkstoffe eine äußerst hohe mechanische Belastbarkeit der damit gebildeten Planetenräder erlauben. Aufgrund dieser hohen Belastbarkeit kann es möglich werden, die Planetenräder mit extrem hohen Drehzahlen rotieren zu lassen. Da die bei einer solchen Rotation gespeicherte Rotationsenergie Eᵣₒₜ quadratisch von der Rotations- bzw. Winkelgeschwindigkeit ω aber nur linear von dem Trägheitsmoment J abhängt (Eᵣₒₜ = ½ J ω²), kann auch mit Planetenrädern aus einem verhältnismäßig leichten Kunstfaserwerkstoff aufgrund der hohen mechanischen Belastbarkeit und der damit verbundenen hohen zulässigen Rotationsgeschwindigkeit eine große Rotationsenergiemenge gespeichert werden. Zudem kann eine Baugröße des Planetengetriebes aufgrund verwendbarer kleiner, aber hochfester Planetenräder gering gehalten werden.

Die Planetenräder des vorgeschlagenen mechanischen Energiespeichers können vorzugsweise hinsichtlich ihrer Geometrie und hinsichtlich der zulässigen mechanischen Belastbarkeit während des Rotierens derart ausgestaltet sein, dass im normalen Betrieb, das heißt bei typischerweise auftretenden Drehzahlen innerhalb des Planetengetriebes, eine Rotationsenergie von mindestens 1000 J, vorzugsweise mindestens 2000 J gespeichert werden kann. Die Möglichkeit, eine derart große Energiemenge mechanisch zu speichern, hat sich als vorteilhaft insbesondere in Fällen erwiesen, wenn Elektrofahrzeuge beispielsweise aus dem Stand an einer Steigung oder zum Beispiel beim Anfahren auf einem Bordstein beschleunigen sollen.

Ein mit einem erfindungsgemäßen mechanischen Energiespeicher ausgestattetes Fahrzeug, insbesondere ein Elektro- oder Hybridfahrzeug, kann dazu ausgelegt sein, während eines Bremsvorganges Energie in Form von Rotationsenergie in den Planetenrädern des mechanischen Energiespeichers zu speichern und/oder während eines Beschleunigungsvorganges in den Planetenrädern des mechanischen Energiespeichers gespeicherte Rotationsenergie dem Fahrzeug zur Umwandlung in kinetische Energie, d.h. zur Beschleunigung des Fahrzeugs, bereitzustellen. Neben der bereits oben beschriebenen Energierekuperation bei Bremsvorgängen kann somit auch eine Unterstützung des Elektromotors zum Beispiel beim Anfahren an einer Steigung oder beim starken Beschleunigen ermöglicht werden. Eine solche kurzzeitige Leistungserhöhung wird hierbei auch als "Power-Boosterung" bezeichnet. Bei herkömmlichen Elektrofahrzeugen war eine solche Power-Boosterung teilweise nur eingeschränkt möglich, da die für eine zusätzliche Leistungsbeaufschlagung des Elektromotors zu schaltende elektrische Leistung die Leistungselektronik stark erhitzen und zu einer Überbelastung der Leistungselektronik, insbesondere im Wechselrichter, führen konnte. Dies konnte teilweise sogar dazu führen, dass die begrenzte Leistung nicht zu einem Anfahren an Steigungen ausgereicht hat. Aufgrund der hierin vorgeschlagenen zusätzlichen Energiespeicherung im mechanischen Energiespeicher kann eine Anfahrcharakteristik sowie eine Power-Boosterung verbessert werden.

In einer speziellen Ausgestaltung weist das Fahrzeug zwei erfindungsgemäße mechanische Energiespeicher auf, wobei ein erster Energiespeicher dazu ausgelegt ist, zum Speichern von Rotationsenergie die Planetenräder in einer entgegengesetzten Richtung wie bei einem zweiten Energiespeicher rotieren zu lassen. Hierdurch kann vermieden werden, dass ein Richtungswechsel des Fahrzeugs infolge von Corioliskräften erschwert wird. Die entgegengesetzte Rotationsrichtung der Planetenräder kann beispielsweise durch ein Elektromotor-seitiges und ein Radantriebs-seitiges Getriebe zur Drehrichtungsumkehr der Elektromotor- und der Raddrehung erreicht werden.

Alternativ kann der mechanische Energiespeicher in dem Fahrzeug derart angeordnet sein, dass die Planetenräder um eine vertikale Achse rotieren. Unter der vertikalen Achse wird dabei eine Achse verstanden, die orthogonal zu einer Ebene steht, entlang derer sich das Fahrzeug beim Fahren bewegt. Bei einem solchen Einbau des Energiespeichers in dem Fahrzeug, bei dem die Planetenräder horizontal angeordnet sind und um eine vertikale Achse rotieren können, wirken Corioliskräfte nicht gegen einen Richtungswechsel des Fahrzeugs, sondern können es in der Lage seiner Hochachse stabilisieren, um so zum Beispiel einem Fahrzeugüberschlag entgegenzuwirken. Eine Umsetzung der Einbaulage des Planetengetriebes kann über ein Radantriebs-seitiges Kegelradgetriebe und horizontalen Einbau der Elektromaschine erreicht werden.

Mit Hilfe des hierin vorgeschlagenen mechanischen Energiespeichers bzw. eines Fahrzeugs, das mit einem solchen Energiespeicher ausgerüstet ist, können eine Vielzahl von Vorteilen erreicht werden, wie unter anderem:
- Es kann ein Rekuperationsgrad verbessert werden, das heißt, eine Nutzung von Bremsenergie kann auch bei stärkeren Bremsvorgängen gesteigert werden. Indirekt kann hierdurch die Reichweite des Elektrofahrzeugs erhöht werden. Durch die verbesserte Rekuperation ist der Einfluss der zu beschleunigenden Fahrzeugmasse auf die Reichwerte gemindert, das heißt, ein erhöhtes Fahrzeuggewicht spielt eine geringere Rolle. Ein maximaler Rekuperationsgrad kann hierbei mit einem maximalen Massenträgheitsmoment der an den Planetenrädern vorgesehenen Schwungmassenbereiche erreicht werden.
- Durch den verbesserten Rekuperationsgrad kann auch eine Lebensdauer von Bremsscheiben und Bremsbelägen aufgrund der geringeren Bremsbeanspruchung verlängert werden.
- Mit Hilfe der in dem mechanischen Energiespeicher gespeicherten Rotationsenergie kann ein Anfahren insbesondere an Steigungen durch Hinzuschalten der Schwungmassen zum Elektroantrieb verbessert werden.
- Während der Fahrt kann eine erhebliche Power-Boosterung durch Hinzuschalten der Schwungmassen zum Elektroantrieb erreicht werden.
- Die Ausgestaltung des mechanischen Energiespeichers mit dem Planetengetriebe ermöglicht eine kostengünstige und robuste Implementierung der mechanischen Energiespeicherung.
- Der Betriebspunkt eines Elektromotors, bei dem die Drehzahl unter Berücksichtigung des Drehmoments gewählt wird, kann durch Nutzung des zusätzlichen mechanischen Energiespeichers über Rekuperation optimiert werden.
- Beim Anfahren unter Last kann die in dem mechanischen Energiespeicher gespeicherte Rotationsenergie dazu genutzt werden, das für Elektrofahrzeuge typische Ruckeln zu vermeiden.
- Bei einer Verwendung von mechanischen Energiespeichern für alle vier Räder eines Fahrzeugs kann eine Allrad-Funktionalität implementiert werden.

Es wird angemerkt, dass Gedanken zu der Erfindung hierin im Zusammenhang sowohl mit dem mechanischen Energiespeicher als auch einem Fahrzeug, das mit einem solchen Energiespeicher ausgestattet ist, sowie auch im Zusammenhang mit bestimmten Funktionsmodi eines solchen Fahrzeugs bzw. Energiespeichers beschrieben sind. Einem Fachmann ist hierbei klar, dass die einzelnen beschriebenen Merkmale auf verschiedene Weise miteinander kombiniert werden können, um so auch zu anderen Ausgestaltungen der Erfindung zu führen.

### Kurze Beschreibung der Zeichnungen

Nicht einschränkend auszulegende Ausführungsformen der Erfindung werden nachfolgend mit Bezug auf die beigefügten Figuren beschrieben. Die Figuren sind lediglich schematisch und nicht maßstabsgetreu.
Fig. 1 zeigt eine Seitenansicht eines erfindungsgemäßen mechanischen Energiespeichers.
Fig. 2 zeigt eine Schnittansicht eines erfindungsgemäßen mechanischen Energiespeichers.
Fig. 3 zeigt ein Planetenrad für einen erfindungsgemäßen mechanischen Energiespeicher.
Fig. 4 zeigt äußerst schematisch ein Fahrzeug mit einem erfindungsgemäßen Energiespeicher.
Fig. 5 bis 13 dienen zur Veranschaulichung von Funktionsarten, wie sie mit einem erfindungsgemäßen Energiespeicher implementiert werden können.

### AUSFÜHRUNGSFORMEN DER ERFINDUNG

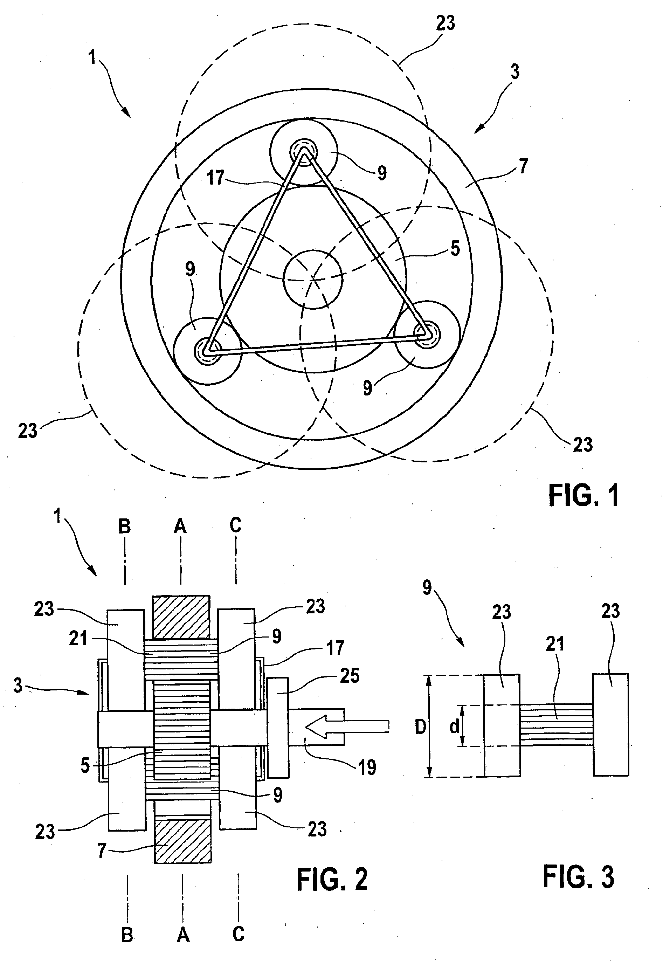

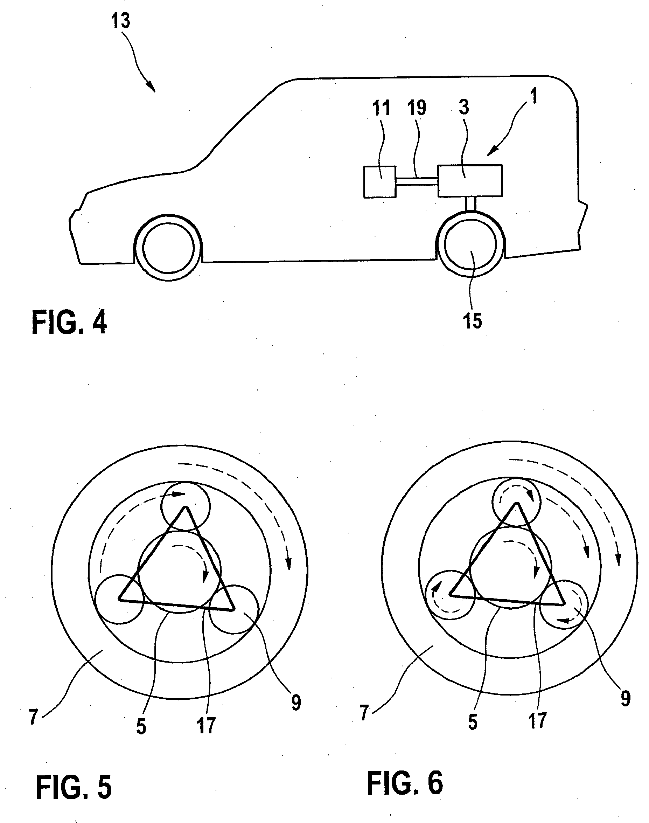

Fig. 1 und Fig. 2 zeigen einen erfindungsgemäßen mechanischen Energiespeicher in Seitenansicht bzw. in Querschnittsansicht. Dabei kann ein erfindungsgemäßer Energiespeicher in einem Elektro- oder Hybridfahrzeug eingesetzt werden, wie dies schematisch in Fig. 4 dargestellt ist.

Der Energiespeicher 1 weist ein Planetengetriebe 3 auf. Das Planetengetriebe 3 weist ein zentrales Sonnenrad 5, ein Außenrad 7 und drei zwischen dem Sonnenrad 5 und dem Außenrad 7 angeordnete Planetenräder 9 auf. An einem Außenumfang des Sonnenrades 5 und an einem Innenumfang des Außenrades 7 sind jeweils Zähne vorgesehen (in Fig. 1 nicht dargestellt), in die Zähne der Planetenräder 9 eingreifen, so dass eine Rotation des Sonnenrades 5 bzw. des Außenrades 7 eine entsprechende Rotation und/oder Bewegung der Planetenräder 9 bewirkt. Das Sonnenrad 5 ist hierbei über eine Welle 19 mit einem Elektromotor 11 des Fahrzeugs 13 (siehe Fig. 4) drehfest verbunden. Das Außenrad 7 ist mit einem Radantrieb zum Antreiben der Räder 15 drehfest verbunden. Die drei Planetenräder 9 sind durch ein Planetenradgestänge 17 starr miteinander verbunden.

In Fig. 3 ist ein Planetenrad 9 des Planetengetriebes 3 dargestellt. Das Planetenrad 9 weist einen Zahnradbereich 21 auf, der, wie in Fig. 2 dargestellt, in dem Planetengetriebe 3 zwischen dem Sonnenrad 5 und dem Außenrad 7 angeordnet ist und durch daran angeordnete Zähne mit diesen im Eingriff steht. An den axialen Enden des Planetenrades 9 sind jeweils Schwungmassenbereiche 23 ausgebildet. Diese Schwungmassenbereiche sind als kreisförmige Scheiben realisiert, die einen größeren Durchmesser D aufweisen als der Durchmesser d des Zahnradbereichs 21.

Wie in Fig. 2 dargestellt, liegen die Schwungmassenbereiche 23 außerhalb, das heißt lateral versetzt, zu einer Ebene A-A des Planetengetriebes 3, in der die Zahnradflächen ineinandergreifen. In Fig. 2 sind die Schwungmassenbereiche 23 der Planetenräder 9 dabei derart ausgebildet, dass sie in gleichen Ebenen B-B, C-C angeordnet sind. Dadurch ist der maximal mögliche Durchmesser der Schwungmassenbereiche 23 jedoch begrenzt, da sich Schwungmassenbereiche 23 benachbarter Planetenräder 9 nicht berühren dürfen.

Um größere Durchmesser für die Schwungmassenbereiche 23 realisieren zu können, können die an den Enden benachbarter Planetenräder 9 angeordneten Scheiben axial zueinander versetzt angeordnet werden, so dass sie sich aufgrund eines dazwischenliegenden axialen Spaltes nicht berühren. Auf diese Weise können Planetenräder mit sehr großen Schwungmassenbereichen 23 realisiert werden, die sich, wie in Fig. 1 schematisch gestrichelt dargestellt, in einer Seitenansicht überlappen können.

Nachfolgend sollen verschiedene Funktionsarten, in denen der beschriebene mechanische Energiespeicher bzw. ein damit ausgestattetes Elektrofahrzeug betrieben werden kann, unter Bezugnahme auf die Fig. 5 bis 13 beschrieben werden.

In Fig. 5 ist ein Fahren ohne Power-Booster-Betrieb und ohne Rekuperation dargestellt. Die Drehachsen für das Sonnenrad 5 und den Planetenradverbund 9, 17 sind hierbei starr aneinander gekoppelt. Die Planetenräder 9 rotieren dabei nicht um ihre eigene Achse. Der Elektromotor 11 treibt das Außenrad 7 bzw. das damit verbundene Rad 15 an.

Um die Achsen für das Sonnenrad 5 und den Planetenradverbund 9, 17 starr aneinander koppeln zu können, wird der Mitnehmerflansch 25 (siehe Fig. 2), der eine lokale Verdickung der Sonnenradachse 19 darstellt, durch axiale Verschiebung der Sonnenradachse 19 auf das Planetenradgestänge 17 angedrückt.

Werden, wie in Fig. 6 dargestellt, die Drehachsen für das Sonnenrad 5 und den Planetenradverbund 9, 13 voneinander entkoppelt und die Elektromaschine 11 in einen generatorischen Betrieb geschaltet, so rekuperieren die Elektromaschine 11 in Form von Generierung elektrischer Leistung und die Planetenräder 9 in Form von Aufnahme rotatorischer Energie gemeinsam. Damit ist die gesamte rekuperierbare Leistung bzw. die Bremsleistung erhöht. Das Fahrzeug 13 wird in einer ersten Bremsphase abgebremst.

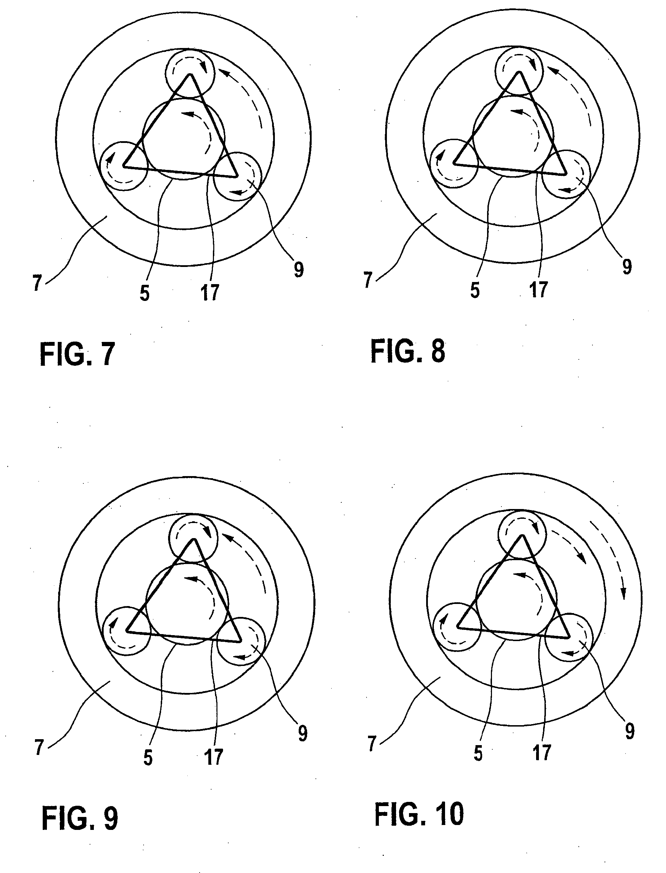

In der in Fig. 7 dargestellten zweiten Bremsphase bis zu einem Fahrzeugstillstand wird die Elektromaschine 11 entgegengesetzt zur Drehrichtung während der ersten Bremsphase betrieben. Die an den Planetenrädern 9 vorgesehenen Schwungmassen laden sich weiter mit rotatorischer Energie auf. Infolge der Beschleunigung der Trägheitsmassen wird das Rad 15 weiter abgebremst. Das heißt, das Fahrzeug wird durch die Elektromaschine 11 abgebremst und die Bremsenergie in den Schwungmassen 23 gespeichert. Kurz vor dem Fahrzeugstillstand bzw. bei einer Notbremsung kann das Fahrzeug über die konventionelle Radbremse zum Stillstand gebracht werden.

Nachdem das Fahrzeug stillsteht, wie in Fig. 8 gezeigt, bleibt die Radbremse aktiviert. Die Elektromaschine 11 rekuperiert die kinetische Energie der Planetenräder 9. Das heißt, die gesamte Bremsleistung aus den beiden Bremsphasen kann durch die Elektromaschine 11 über einen längeren Zeitraum als der stattgefundene Bremsvorgang rekuperiert werden. Folglich ist die von der Batterie aufzunehmende Stromstärke soweit reduziert, dass die Batterie nicht überlastet wird. Dies gilt auch nach einer Bremsung, die noch nicht zum Fahrzeugstillstand geführt hat.

Alternativ hierzu kann die Elektromaschine 11 nach einer vollständigen Bremsung und beim anschließenden Fahrzeugstillstand im Leerlauf sein, wie die in Fig. 9 dargestellt ist, so dass die rotatorische Energie der Planetenräder 9 für einen anschließenden Power-Booster-Betrieb gespeichert bleibt. Sollten bei nicht vorausgegangener Rekuperation die Planetenräder 9 keine kinetische Rotationsenergie aufweisen (zum Beispiel beim Fahrzeugstart), so können diese vor dem Anfahren bei mittels der mechanischen Radbremse arretierten Rädern durch die Elektromaschine 11 in Rotation versetzt werden.

Wie in Fig. 10 veranschaulicht, kann das Fahrzeug beim Anfahren durch die Rotationsenergie der Planetenräder 9 beschleunigt werden. Der zuvor im Leerlauf betriebene Elektromotor 11 wird rekuperativ abgebremst, das Rad 15 versetzt sich in Drehung. Zusätzlich kann das Fahrzeug durch den Elektromotor 11 beschleunigt werden, indem dieser entgegen dem Drehsinn, wie er in Fig. 9 dargestellt wurde, angetrieben wird.

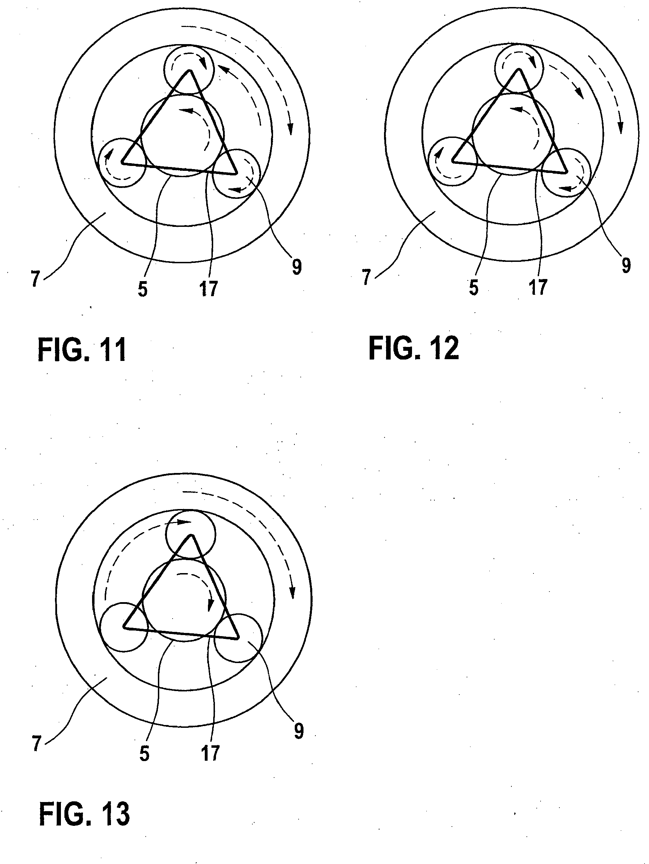

Wie in Fig. 11 dargestellt, kann das Fahrzeug dahingleiten, indem die Elektromaschine 11, die Planetenräder 9 und das Rad 15 im Leerlauf sind.

Nach einem solchen Dahingleiten kann das Fahrzeug, wie in Fig. 12 dargestellt, über die in den Schwungmassen 23 gespeicherte Rotationsenergie und, zum Beispiel für einen Power-Booster-Betrieb, zusätzlich über die Elektromaschine 11 beschleunigt werden. Soll ausschließlich die kinetische Energie der Planetenräder 9 zum Beschleunigen eingesetzt werden, wird die Elektromaschine 11 aus dem Leerlauf heraus rekuperativ abgebremst. Bei Unterstützung der Beschleunigung durch die Elektromaschine 11 (Power-Booster-Betrieb) wird diese entgegengesetzt zum Drehsinn des vorangegangenen Leerlaufs angetrieben.

Für ein in Fig. 13 dargestelltes Cruisen nach einem Power-Boostern werden die Drehachsen für das Sonnenrad 5 und den Planetenradverbund 9, 13, sobald sie synchron rotieren, für das Cruisen starr aneinander gekoppelt. Die Planetenräder 9 rotieren nicht weiter um ihre eigene Achse. Das Koppeln beider Achsen sollte immer ab Erreichen identischer Drehzahl erfolgen, ansonsten würde eine weitere Beschleunigung des Fahrzeugs durch die Elektromaschine 11 nur unter Schlupf über die dann in Rotation versetzten Planetenräder 9 erfolgen können. Das Fahrzeug könnte ohne Kopplung der Achsen nicht ausreichend beschleunigt werden oder unter Last an einer Steigung sich trotz einer Beschleunigung durch die Elektromaschine 11 verlangsamen.

Um in den mit den Schwungmassenbereichen 23 versehenen Planetenrädern 9 möglichst viel Rotationsenergie speichern zu können, sollte einerseits deren Trägheitsmoment möglichst hoch sein und andererseits die Möglichkeit bestehen, die Planetenräder 9 in eine möglichst schnelle Rotation zu versetzen. Für eine schnelle Rotation sollten die Planetenräder im Zahnradbereich 21 einen möglichst kleinen Durchmesser aufweisen, um auf diese Weise ein hohes Übersetzungsverhältnis zwischen den Planetenrädern 9 und dem Sonnenrad 5 zu ermöglichen. Ein anzustrebendes Übersetzungsverhältnis kann dabei zum Beispiel 30:1 betragen, das heißt, die Drehzahl der Planetenräder 9 ist dreißigfach höher als die Drehzahl des Sonnenrades 5 bzw. die Drehzahl der Fahrzeugräder 15.

Andererseits sollten die an den Planetenrädern 9 an deren axialen Enden vorgesehenen Schwungmassen eine möglichst hohe Massenträgheit, das heißt ein möglichst hohes Trägheitsmoment aufweisen. Es kann zum Beispiel angestrebt sein, in dem Planetengetriebe genügend Rotationsenergie zu speichern, um beispielsweise einem 1000 kg schweren Fahrzeug zum Anfahren an einem Bordstein, der eine Höhe von 20 cm aufweist, eine hierfür ausreichende Energie von 2000 J übertragen zu können. Unter der Annahme, dass der mechanische Energiespeicher bei einer Fahrgeschwindigkeit von 50 km/h "aufgeladen wird", wobei sich die Planetenräder bei einem Übersetzungsverhältnis von 30:1 dann mit einer Drehzahl von etwa 12000 Umdrehungen pro Minute drehen, und unter der weiteren Annahme, dass die Planetenräder einschließlich der Schwungmassenbereiche aus Stahl mit einer Schwungmassenbereichsdicke von 20 mm gebildet sind, kann errechnet werden, dass ein Durchmesser des Schwungmassenbereichs größer als 72 mm sein sollte.

## Patentansprüche

1. Mechanischer Energiespeicher (1) für ein Fahrzeug (13), wobei der Energiespeicher aufweist: ein Planetengetriebe (3); wobei ein Sonnenrad (5) des Planetengetriebes eine Sonnenradachse (19) aufweist und mit einem Motor (11) des Fahrzeugs verbunden ist;
wobei ein Außenrad (7) des Planetengetriebes mit einem Radantrieb des Fahrzeugs verbunden ist; und wobei Planetenräder (9) über ein Planetenradgestänge (17) miteinander verbunden sind;
wobei die Planetenräder zur Vergrößerung ihrer Schwungmasse mit Schwungmassenbereichen (23) versehen sind, die einen größeren Durchmesser aufweisen als ein zwischen dem Sonnenrad und dem Außenrad angeordneter Zahnradbereich (21) der Planetenräder, **dadurch gekennzeichnet, dass** an der Sonnenradachse (19) ein Mitnehmerflansch (25) vorgesehen ist, der dazu ausgebildet ist, die Sonnenradachse (19) mit dem Planetenradgestänge (17) zu koppeln oder die Sonnenradachse (19) von dem Planetenradgestänge (17) zu entkoppeln, wobei bei einer Entkopplung Rotationsenergie im Energiespeicher speicherbar ist, wobei, um die Achsen für das Sonnenrad (5) und den Planetenradverbund (9, 17) starr aneinander koppeln zu können, der Mitnehmerflansch (25), der eine lokale Verdickung der Sonnenradachse (19) darstellt, durch axiale Verschiebung der Sonnenradachse (19) auf das Planetenradgestänge (17) angedrückt wird.

2. Mechanischer Energiespeicher nach Anspruch 1, wobei ein Übersetzungsverhältnis zwischen dem Sonnenrad und den Planetenräder mindestens 20:1 beträgt.

3. Mechanischer Energiespeicher nach einem der Ansprüche 1 oder 2, wobei bei den Planetenrädern der Durchmesser (D) der Schwungmassenbereiche wenigstens doppelt so groß ist wie der Durchmesser (d) der Zahnradbereiche.

4. Mechanischer Energiespeicher nach einem der Ansprüche 1 bis 3, wobei die Planetenräder an beiden axialen Enden mit Schwungmassenbereichen versehen sind.

5. Mechanischer Energiespeicher nach einem der Ansprüche 1 bis 4, wobei die Planetenräder einstückig sind.

6. Mechanischer Energiespeicher nach einem der Ansprüche 1 bis 5, wobei die Planetenräder mit Metall gebildet sind.

7. Mechanischer Energiespeicher nach einem der Ansprüche 1 bis 5, wobei die Planetenräder mit einem Kunstfaserwerkstoff gebildet sind.

8. Mechanischer Energiespeicher nach einem der Ansprüche 1 bis 7, wobei die Planetenräder dazu ausgestaltet sind, eine Rotationsenergie von mindestens 1000 J zu speichern.

9. Fahrzeug (13) mit einem mechanischen Energiespeicher (1) gemäß einem der Ansprüche 1 bis 8.

10. Fahrzeug nach Anspruch 9, wobei das Fahrzeug dazu ausgelegt ist, während eines Bremsvorgangs Energie in Form von Rotationsenergie in den Planetenrädern (9) des mechanischen Energiespeichers (1) zu speichern und/oder während eines Beschleunigungsvorgangs in den Planetenrädern des mechanischen Energiespeichers gespeicherte Rotationsenergie dem Fahrzeug zur Umwandlung in kinetische Energie bereitzustellen.

11. Fahrzeug nach einem der Ansprüche 9 oder 10, ferner aufweisend einen zweiten mechanischen Energiespeicher gemäß einem der Ansprüche 1 bis 8, der dazu ausgelegt ist, zum Speichern von Rotationsenergie die Planetenräder in entgegengesetzter Richtung wie bei dem ersten mechanischen Energiespeicher zu rotieren.

12. Fahrzeug nach einem der Ansprüche 9 oder 10, wobei der mechanische Energiespeicher derart in dem Fahrzeug angeordnet ist, dass die Planetenräder um eine vertikale Achse rotieren.

## Claims

1. Mechanical energy store (1) for a vehicle (13), the energy store having: a planetary gear mechanism (3); a sun gear (5) of the planetary gear mechanism having a sun gear axle (19) and being connected to an engine (11) of the vehicle;
an outer gear (7) of the planetary gear mechanism being connected to a wheel drive of the vehicle; and planetary gears (9) being connected to one another via a planetary gear linkage (17);
the planetary gears being provided with centrifugal mass regions (23) in order to increase their centrifugal mass, which centrifugal mass regions (23) have a greater diameter than a gearwheel region (21) of the planetary gears which is arranged between the sun gear and the outer gear, **characterized in that** a driver flange (25) is provided on the sun gear axle (19), which driver flange (25) is configured to couple the sun gear axle (19) to the planetary gear linkage (17) or to decouple the sun gear axle (19) from the planetary gear linkage (17), it being possible for rotational energy to be stored in the energy store in the case of decoupling, the driver flange (25) which represents a local thickened portion of the sun gear axle (19) being pressed onto the planetary gear linkage (17) by way of axial displacement of the sun gear axle (19), in order for it to be possible to couple the axles for the sun gear (5) and the planetary gear assembly (9, 17) rigidly to one another.

2. Mechanical energy store according to Claim 1, a transmission ratio between the sun gear and the planetary gears being at least 20:1.

3. Mechanical energy store according to either of Claims 1 and 2, the diameter (D) of the centrifugal mass regions in the case of the planetary gears being at least twice as great as the diameter (d) of the gearwheel regions.

4. Mechanical energy store according to one of Claims 1 to 3, the planetary gears being provided with centrifugal mass regions at both axial ends.

5. Mechanical energy store according to one of Claims 1 to 4, the planetary gears being in one piece.

6. Mechanical energy store according to one of Claims 1 to 5, the planetary gears being formed with metal.

7. Mechanical energy store according to one of Claims 1 to 5, the planetary gears being formed with a synthetic fibre material.

8. Mechanical energy store according to one of Claims 1 to 7, the planetary gears being configured to store a rotational energy of at least 1000 J.

9. Vehicle (13) having a mechanical energy store (1) according to one of Claims 1 to 8.

10. Vehicle according to Claim 9, the vehicle being designed to store energy in the form of rotational energy in the planetary gears (9) of the mechanical energy store (1) during a braking operation and/or to provide rotational energy which is stored in the planetary gears of the mechanical energy store to the vehicle for conversion into kinetic energy during an acceleration operation.

11. Vehicle according to either of Claims 9 and 10, having, furthermore, a second mechanical energy store according to one of Claims 1 to 8 which is designed to rotate the planetary gears in the opposite direction to the first mechanical energy store in order to store rotational energy.

12. Vehicle according to either of Claims 9 and 10, the mechanical energy store being arranged in the vehicle in such a way that the planetary gears rotate about a vertical axis.

## Revendications

1. Accumulateur d'énergie mécanique (1) pour un véhicule (13), l'accumulateur d'énergie présentant : une transmission planétaire (3) ; une roue solaire (5) de la transmission planétaire présentant un axe de roue solaire (19) et étant connectée à un moteur (11) du véhicule ;
une roue extérieure (7) de la transmission planétaire étant connectée à un entraînement de roue du véhicule ; et des pignons satellites (9) étant connectés les uns aux autres par le biais d'une tringlerie de pignons satellites (17) ;
les pignons satellites, pour augmenter leur masse d'inertie, étant pourvus de régions de masse d'inertie (23) qui présentent un plus grand diamètre qu'une région de roue dentée (21) des pignons satellites disposés entre la roue solaire et la roue extérieure, **caractérisé en ce qu'**une bride d'entraînement (25) est prévue sur l'axe de la roue solaire (19), laquelle est réalisée de manière à accoupler l'axe de la roue solaire (19) à la tringlerie de pignons satellites (17) ou à désaccoupler l'axe de la roue solaire (19) de la tringlerie de pignons satellites (17), l'énergie de rotation, dans le cas d'un désaccouplement, pouvant être stockée dans l'accumulateur d'énergie,
la bride d'entraînement (25), qui constitue un épaississement local de l'axe de la roue solaire (19), afin de pouvoir accoupler rigidement l'un a l'autre les axes de la roue solaire (5) et de l'assemblage des pignons satellites (9, 17), étant pressée contre la tringle de pignons satellites (17) par déplacement axial de l'axe de la roue solaire (19).

2. Accumulateur d'énergie mécanique selon la revendication 1, dans lequel un rapport de démultiplication entre la roue solaire et les pignons satellites est d'au moins 20:1.

3. Accumulateur d'énergie mécanique selon l'une quelconque des revendications 1 et 2, dans lequel le diamètre (D) des régions de masse d'inertie, dans le cas des pignons satellites, est au moins deux fois plus grand que le diamètre (d) des régions de roue dentée.

4. Accumulateur d'énergie mécanique selon l'une quelconque des revendications 1 à 3, dans lequel les pignons satellites sont pourvus aux deux extrémités axiales de régions de masse d'inertie.

5. Accumulateur d'énergie mécanique selon l'une quelconque des revendications 1 à 4, dans lequel les pignons satellites sont réalisés d'une seule pièce.

6. Accumulateur d'énergie mécanique selon l'une quelconque des revendications 1 à 5, dans lequel les pignons satellites sont formés de métal.

7. Accumulateur d'énergie mécanique selon l'une quelconque des revendications 1 à 5, dans lequel les pignons satellites sont formés d'un matériau renforcé par des fibres synthétiques.

8. Accumulateur d'énergie mécanique selon l'une quelconque des revendications 1 à 7, dans lequel les pignons satellites sont configurés de manière à accumuler une énergie de rotation d'au moins 1000 J.

9. Véhicule (13) comprenant un accumulateur d'énergie mécanique (1) selon l'une quelconque des revendications 1 à 8.

10. Véhicule selon la revendication 9, le véhicule étant conçu, pendant une opération de freinage, pour accumuler de l'énergie sous la forme d'énergie de rotation dans les pignons satellites (9) de l'accumulateur d'énergie mécanique (1) et/ou, pendant une opération d'accélération, pour fournir au véhicule de l'énergie de rotation stockée dans les pignons satellites de l'accumulateur d'énergie mécanique en vue de sa conversion en énergie cinétique.

11. Véhicule selon l'une quelconque des revendications 9 ou 10, présentant en outre un deuxième accumulateur d'énergie mécanique selon l'une quelconque des revendications 1 à 8, lequel est conçu pour accumuler de l'énergie de rotation afin de faire tourner les pignons satellites dans le sens inverse de celui du premier accumulateur d'énergie mécanique.

12. Véhicule selon l'une quelconque des revendications 9 ou 10, dans lequel l'accumulateur d'énergie mécanique est disposé dans le véhicule de telle sorte que les pignons satellites tournent autour d'un axe vertical.
